# EUROPÄISCHE PATENTANMELDUNG

(11) **EP 0 800 007 A2**
(43) Veröffentlichungstag der Anmeldung: **08.10.1997**
(21) Anmeldenummer: 97102187.8
(22) Anmeldetag: 12.02.1997
(51) Int. Cl.: F16C 3/02, F16D 3/06, B29C 70/22, C09J 5/00

(54) **Gelenkwelle mit verstärktem Kunststoffrohr und mit einem endseitig drehfest verbundenen Gelenkanschlusskörper**

(30) Priorität: 06.04.1996 DE 19613857
(71) Anmelder: DAIMLER-BENZ AKTIENGESELLSCHAFT, 70567 Stuttgart (DE)
(72) Erfinder: Ilzhöfer, Karl-Heinz, 73230 Kirchheim (DE); Ediger, Bertold, Dr., 71522 Backnang (DE); Albers, Hartmut, 70178 Stuttgart (DE); Wieland, Dittmar, 71570 Oppenweiler (DE); Kandert, Dieter, 75446 Wiernsheim (DE)

(57) **Zusammenfassung**

Die Erfindung betrifft eine Gelenkwelle mit einem Endlosfaserverstärkten Kunststoffrohr (1) aus einem duroplastischen Matrixmaterial und mit einem Gelenkanschlußkörper (6), der über einen in das Kunststoffrohr eingesteckten Steckzapfen drehfest mit dem Kunststoffrohr verbundenen ist. Erfindungsgemäß soll die Gelenkwelle zum einen in großen Stückzahlen rationell und für unterschiedliche Bedarfslängen universell herstellbar, darüber hinaus aber selbst bei hohen Betriebstemperaturen mechanisch stark belastbar sein. Zu diesem Zweck ist im Kunststoffrohr (1) eine Innenlage (2) mit axial ausgerichteten, vorzugsweise aus Kohlenstoff bestehenden Fasern oder Faserstränge (3) vorgesehen, auf der wenigstens eine Doppellage (4) mit symmetrisch zur Achsrichtung geneigt angeordneten Fasern (5) aufgebracht ist. Innenseitig ist das Kunststoffrohr (1) mit einer axial ausgerichteten, auf der gesamten Längserstreckung des Kunststoffrohres (1) gleichbleibenden, aus dem Matrixwerkstoff gebildeten Profilierung (8) nach Art eines Keilnabenprofiles versehen. Der an seinem Außenumfang mit einer formnegativ entsprechenden Gegenprofilierung (9) versehene Steckzapfen (7) greift formschlüssig mit Schiebesitz- oder leichter Preßsitzpassung in die Innenprofilierung (8) des Kunststoffrohres ein. Der Steckzapfen (7) ist im Kunststoffrohr (1) zusätzlich in Axialrichtung durch eine Klebung oder durch eine Rastverbindung mittels eines Federsprengringes (10) gesichert.

## Beschreibung

Die Erfindung geht aus von einer Gelenkwelle nach dem Oberbegriff von Anspruch 1, wie sie beispielsweise aus einer Veröffentlichung in der DE-Z ATZ Automobiltechnische Zeitschrift 96 (1994), Seiten 612 bis 617, W. Hoffman et al. "Die zweite Generation von Faserverbund-Kardanwellen" als bekannt hervorgeht. In einem früheren Jahrgang der gleichen Zeitschrift ATZ Automobiltechnische Zeitschrift 91 (1989) ist auf den Seiten 149 bis 152 von W. Hoffman ein weiterer Beitrag mit dem Thema "Faserverbundwerkstoff im Antriebsstrang" veröffentlicht, in dem über die "erste Generation" von Faserverbund-Kardanwellen berichtet wird.

Die beschriebenen Gelenkwellen weisen ein über die gesamte Länge hinweg durchmessergleiches, endlosfaser-verstärktes Kunststoffrohr und - zumindest in der zweiten Generation - einen aus kurzfaser-verstärktem Kunststoff bestehenden Gelenkanschlußkörper auf, der über einen in das Kunststoffrohr eingesteckten Steckzapfen drehfest mit dem Kunststoffrohr verklebt ist. Der Umfang des gezeigten Steckzapfens ist mit axial verlaufenden Kleberaufnahmerillen versehen, die am freien Ende des Steckzapfens axial durch einen umlaufenden Wulst verschlossen sind. Im Zusammenhang mit der klebungsbedingten Gestaltung der Verbindungsstelle kann auf die EP 318 818 B1 verwiesen werden. Die Innenoberfläche des Kunststoffrohres ist aufgrund des Herstellungsprozesses - die Fasern sind unter etwa 10 bis 12° gegen die Achsrichtung geneigt - glattflächig gestaltet. Die möglichen Spitzenbelastungen der Gelenkwellen sind durch die Klebeverbindung und durch die im Fahrzeugbetrieb maximal auftretenden Spitzentemperaturen bestimmt. Die in der zitierten Literaturstelle erwähnten größten Lastwerte betragen etwa 3300 Nm bei Raumtemperatur und etwa 2900 Nm bei 100°C.

Aufgrund von Beobachtungen der Anmelderin treten jedoch zum einen höhere Spitzentemperaturen und zum anderen - zumindest bei schwereren und/oder stärker motorisierten Personenkraftwagen - auch höhere Spitzendrehmomente auf. Es ist hier vor allem der Fall eines sog. Knallstartes - schlagartiges Schließen der Schaltkupplung bei hochtourendem Motor - zugrunde zu legen, der die Gelenkwelle mit einem sehr hohen Drehmomentstoß belastet. Je nach Größe des Motors und Gewicht des Fahrzeuges können hier Spitzendrehmomente von deutlich über 2500 Nm auftreten. Diese Knallstart-Belastung muß außerdem bei extrem aufgeheizter Gelenkwelle angenommen werden. Die Anmelderin hat in unmittelbarer Nachbarschaft der Gelenkwelle Oberflächentemperaturen an Triebwerkteilen von 160°C beobachtet. Wegen dieser hohen, wenn auch nicht üblichen, aber im Einzelfall nicht auszuschließenden und somit möglichen Belastungen der Gelenkwelle hat sich die Anmelderin für Gelenkwellen in Faserverbund-Bauart trotz deren Vorteile bezüglich Gewichtseinsparung und Akustik bisher aus Funktionsgründen nicht entschließen können. Abgesehen davon sind mechanisch hochbeanspruchte Klebungen der angesprochenen Art fertigungstechnisch nicht unproblematisch, d.h. eine solche Klebung ist prozeßtechnisch nicht absicherbar, weil es bei aller Vorsorge nie völlig ausgeschlossen werden kann, daß bei einer Serienproduktion in vereinzelten Fällen unbemerkt Verschmutzungen oder Lufteinschlüsse an die Fügestelle gelangen, die die Belastbarkeit der Klebestelle empfindlich beeinträchtigen können.

Es ist auch bekannt - vgl. z.B. die DE 29 11 213 A1, faserverstärkte Kunststoffrohre für Gelenkwellen aus harzgetränkten Fasersträngen oder Gewebebahnen zu wickeln und dabei die Rohrenden besonders zu gestalten und metallene Endfittings in die Rohrenden formschlüssig zu integrieren, die dann mit Gelenkflanschen verschweißt werden können. Eine so hergestellte Krafteinleitung in das Kunststoffrohr ist mechanisch höher belastbar. Hierbei können Glas- oder Kohlenstoffasern eingesetzt werden. Auf den Wickelkern wird endseitig eine auf ihrer Außenseite längsgenutete Hülse lagedefiniert aufgesteckt und mit den Lagen überwickelt, wobei aber das Ende der Hülse noch aus den Lagen herausschaut. Während des Wickelns werden innenseitig genutete Schalenteile, die sich zu einer weiteren Hülse ergänzen, zwischen zwei benachbarte Einzellagen in der Weise eingelegt, daß die Nuten der Schalenteile mit den Wülsten der inneren Hülse form- und lagemäßig einander entsprechen und die zwischen beiden eingeschlossenen Lagen mäanderförmig verformen. Diese Verformung geht aufgrund einer zum Kunststoffrohr hin auslaufenden Profilierung an der Hülse bzw. den Schalenteilen in eine zylindrische Wandung des Rohres über. Nach dem Wickeln der Lagen zu einem noch weichen Rohr und dem Einarbeiten der Metallteile in die Rohrenden wird der Kunststoff ausgehärtet, wobei die Metallteile an den Rohrenden fest und vor allem Formschlüssig in den Werkstoffverbund eingebunden werden.

Eine ähnliche Technologie zeigen die US-PS'en 4 238 540 oder 4 279 275, bei denen im Bereich der Rohrenden jeweils zwei Hülsen mit sinusförmiger Profilierung innenseitig bzw. außenseitig auf die noch weichen Lagen des Wickels aufgebracht und der Wickel in dem von den Hülsen eingeschlossenen Bereich sinusförmig geformt und ein Formschluß zwischen Wickel und Hülsen hergestellt wird. Anschließend wird der Matrixkunststoff gemeinsam mit den Metallhülsen thermisch ausgehärtet und so ein Werkstoffverbund zwischen ihnen erzeugt.

Nachteilig an diesem Stand der Technik ist, daß die Rohre einzeln gefertigt werden müssen, was nicht nur umständlich und für eine Großserienfertigung zu teuer ist, sondern was auch für eine Fertigung von unterschiedlichen Längen von Wellen unterschiedliche Fertigungseinrichtungen erforderlich macht. Diese Fertigung ist also unrationell und nicht-universell. Abgesehen von den genannten fertigungsmäßigen Nachteilen hat eine Verbundwelle mit endseitig integrierten Metallteilen auch den funktionellen Nachteil, daß am Übergang vom Metall in den faserverstärkten Kunststoff ein Steifigkeitssprung aufgrund der unterschiedlichen Festigkeiten und der verschiedenen Elastizitätsmodule der beteiligten Werkstoffe vorhanden ist, der im Betrieb zu Spiel führen kann.

Schließlich sei noch die Faserverbund-Gelenkwelle nach der DE 30 07 896 C2 erwähnt, bei der der Steckzapfen des metallenen Gelenkanschlußkörpers am Außenumfang mit einer feinen axial ausgerichteten Profilierung versehen ist. Zum Fügen des Gelenkanschlußkörpers mit dem zuvor ausgehärten Kunststoffrohr wird der Steckzapfen unter Vorspannung in das innenseitig ein Untermaß aufweisende Kunststoffrohr eingepreßt, wobei sich die stirnseitig scharfkantige Profilierung axial in die Rohrwandung eingräbt und sich eine rohrseitige Gegenprofilierung selber schafft. Außenseitig ist eine Bandagierung auf dem Rohrende aufgebracht, die ein radiales Aufweiten der Rohrwandung verhindert. Zwar ist diese Verbindung auch bei erhöhten Temperaturen statisch und dynamisch hoch belastbar, jedoch läßt sich diese drehstarre Verbindung zum einen nur umständlich herstellen, zum anderen ist auch hier zwischen Rohrende und Gelenkanschlußkörper ein unerwünschter Steifigkeitssprung gegeben. Dieser Steifigkeitssprung würde zwar bei Ersatz des metallenen durch einen aus Kunststoff bestehenden Gelenkanschlußkörper entfallen, letzterer würde sich aber aufgrund einer unvermeidbaren Kriechneigung des Kunststoffs unter der Vorspannung insbesondere bei erhöhten Temperaturen in dem Verbund lockern, so daß eine solche Gelenkwelle nicht belastbar wäre.

Der Vollständigkeit halber seien noch Literaturstellen erwähnt, die das hier interesierende Zieh-Wickelverfahren oder Pullwinding-Verfahren zur Herstellung von mehrlagigen endlosfaser-verstärkten Kunststoffrohren behandeln. Die DE 29 51 399 A1 beispielsweise beschreibt eine Anlage und ein Verfahren für die Herstellung solcher Rohre, wobei insbesondere Kohlenstoff-Fasern eingesetzt werden sollen. Die faserverstärkten Kunststoffrohre sind als Rohmaterial für Sportgeräte aber auch als Hohlprofile für den Maschinenbau gedacht. Auch nach dem in der DE 28 12 916 A1 beschriebenen Verfahren bzw. Vorrichtung sollen vorzugsweise mit Carbonfasern verstärkte Kunststoffrohre hergestellt werden, die u.a. in schnellrotierenden Maschinen als Wellen eingesetzt werden sollen.

Aufgabe der Erfindung ist es, die gattungsgemäß zugrundegelegte Gelenkwelle dahingehend zu verbessern, daß sie zum einen in großen Stückzahlen rationell und für unterschiedliche Bedarfslängen universell gefertigt werden kann, daß sie aber zum anderen selbst bei Temperaturen über 140°C höher als die bekannten Gelenkwellen vergleichbarer Bauart belastbar ist, also auch funktionell hohen Ansprüchen genügt.

Diese Aufgabe wird bei Zugrundelegung der gattungsgemäßen Gelenkwelle erfindungsgemäß durch die kennzeichnenden Merkmale von Anspruch 1 gelöst. Aufgrund der Axialausrichtung der Innenlagen-Fasern läßt sich beim Fertigungsprozeß eine Innenprofilierung auf der gesamten Rohrlänge anformen, in die ohne nennenswerte Vorspannung der Steckzapfen eines Gelenkanschlußkörpers formschlüssig eingesteckt werden kann. Für die Fertigung des Kunststoffrohres kann - muß aber nicht - ein an sich bekannter kontinuierlicher Fertigungsprozeß, nämlich das Zieh/Wickelverfahren, auch Pullwinding-Verfahren genannt, eingesetzt werden, mit dem in rationeller Weise ein quasi-endloses Kunststoffrohr bei hoher Produktivität gefertigt werden kann, von dem dann beliebige Gebrauchslängen abgelängt werden können. Aufgrund des Formschlusses ist die Drehmomentverbindung im Bereich der Rohrenden auch bei angehobenen Temperaturen hoch belastbar. Dank des Schiebesitzes, aber auch beim leichten Preßsitz der Steckverbindung treten keine hohen Dauerspannungen auf und es tritt demzufolge kein Kriechen auf, so daß ohne weiteres Kunststoff auch auf Seiten des Gelenkanschlußkörpers eingesetzt werden kann. Dadurch kann erheblich an Gewicht eingespart werden.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: eine seitliche Schnitt-Ansicht durch bzw. auf ein erstes Ausführungsbeispiel eines Kunststoffrohres für eine erfindungsgemäße Gelenkwelle,
- Fig. 2: einen Querschnitt durch das Kunststoffrohr nach Figur 1,
- Fig. 3 und 4: zwei partielle Querschnitte durch Abwandlungen eines Kunststoffrohres mit unterschiedlicher Innenprofilierung,
- Fig. 5: einen partiellen Schnitt durch die axial mechanisch gesicherte Verbindung zwischen dem Ende des Kunststoffrohres nach Figur 1 und einem Gelenkanschlußkörper und
- Fig. 6: eine perspektivische Darstellung der einzelnen Lagen und ihrer Fasern des Kunststoffrohres.

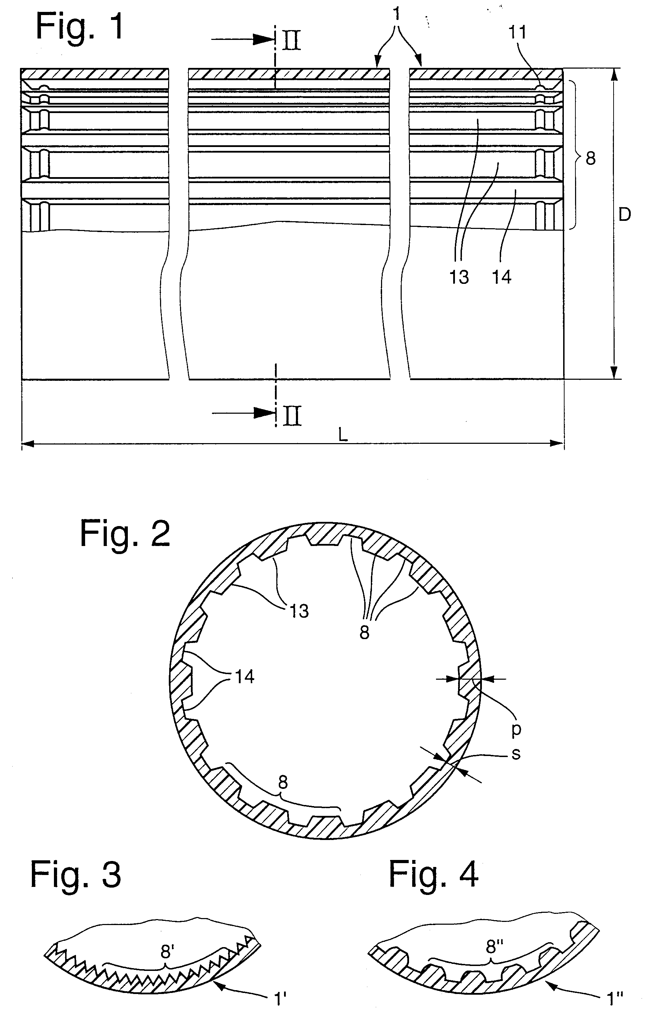

Das in Figur 1 gezeigte Kunststoffrohr 1 für eine Gelenkwelle ist mit Endlosfasern oder Endlos-Fasersträngen - sog. Rovings - 3 und 5 verstärkt, die in ein duroplastisches Matrixmaterial eingebettet sind. Das Kunststoffrohr weist über seine gesamte Länge L hinweg den gleichen Durchmesser D auf und bietet aufgrund dessen die geometrische Voraussetzung, das Rohr in rationeller Weise in einem kontinuierlichen, quasi-endlosen Verfahren nach dem bekannten Zieh-Wickel- oder Pullwinding-Verfahren herzustellen, welches nicht nur rationell und kostengünstig ist, sondern auch die Möglichkeit schafft, ohne nennenswerten Umrüst- und Investitionsaufwand jede beliebige Bedarfslänge von Kunststoffrohren produzieren zu können. Auch unterschiedliche Durchmesser des Kunststoffrohres lassen sich nach einem gewissen, rasch bewerkstelligbaren Umrüstaufwand produzieren. Zur Darstellung einer Gelenkwelle ist das Kunststoffrohr 1 an seinen Enden mit einem Gelenkanschlußkörper 6 drehfest verbunden, wobei diese Drehmomentverbindung über einen in das Kunststoffrohr eingesteckten Steckzapfen 7 bewirkt ist.

Durch die Erfindung soll die Verbindung selbst bei erhöhten Temperaturen mechanisch ohne weiteres besonders hoch belastbar sein. Zu diesem Zweck ist das mehrlagige Kunststoffrohr 1 zum einen mit einer Innenlage 2 mit axial ausgerichteten Fasern 3 versehen, auf der wenigstens eine Doppellage 6 mit symmetrisch zur Achsrichtung unter einem Winkel ±α geneigt angeordnete Fasern 5 aufgebracht ist. Die axial ausgerichteten Fasern 3 erhöhen die Biegesteifigkeit des Kunststoffrohres, was für die Eignung der Gelenkwelle für hohe Drehzahlen besonders wichtig ist. Die geneigt angeordneten Fasern 5 verleihen dem Kunststoffrohr eine hohe, für die Drehmomentübertragung erforderliche Torsions-Steifigkeit. Selbstverständlich ist es bedarfsweise auch möglich, eine weitere Doppellage, im Fach-Jargon auch Plus/minus-Lage genannt, mit geneigt angeordneten Fasern, also insgesamt zwei Doppellagen mit unterschiedlich geneigten Fasern, im Kunststoffrohr vorzusehen. Die Anzahl der Doppellagen und der erforderliche Neigungswinkel ±α der Fasern innerhalb der Doppellagen werden in Abhängigkeit von vorgegebenen Belastungsdaten des jeweiligen Anwendungsfall nach fachüblichen Auslegungskriterien gewählt bzw. ermittelt. Im Falle von zwei Doppel- oder plus/minus-Lagen kann es beispielsweise zweckmäßig sein, in der inneren Doppellage die Fasern oder Faserstränge unter einem kleinen Winkel im Bereich von 3 bis 15° und in der äußeren Doppellage unter einem größeren Neigungswinkel von z.B. 30 bis 75° zu wickeln.

Zur hoch belastbaren Überleitung des Drehmomentes vom Ende des Kunststoffrohres in den Gelenkanschlußkörper 6 ist das Kunststoffrohr auf seiner gesamten Längserstreckung L innenseitig mit einer axial ausgerichteten, gleichbleibenden Profilierung 8 nach Art eines Keilnabenprofiles versehen, die aus dem Matrixwerkstoff und gegebenenfalls darin eigelagerten axial ausgerichteten Fasern oder Fasersträngen gebildetet ist. Diese Profilierung läßt sich prozeßbedingt einfach erzeugen und erfordert keine spezielle Behandlung der Rohrenden; die Profilierung steht an jeder Axialposition des Kunststoffrohres zur Verfügung und erlaubt es, beliebige Rohrlängen herzustellen. Der steckzapfen 7 ist an seinem Außenumfang mit einer formnegativ entsprechenden Gegenprofilierung 9 versehen, die formschlüssig in die Innenprofilierung 8 des Kunststoffrohres eingreift. Der Steckzapfen ist bezüglich seiner Profilierung 9 mit Schiebesitzpassung oder allenfalls leichter Preßsitzpassung mit der Profilierung des Kunststoffrohres zusammengepaßt. Die gewählte Passung zwischen Steckzapfen und Kunststoffrohr muß so gewählt sein, daß einerseits eine gute, d.h. spielfreie Zentrierung zwischen den Fügeteilen stattfindet, die unkontrollierte Unwuchten vermeidet, daß aber andererseits keine nennenswerten Dauerspannungen aufgrund eines zu strammen Sitzes auftreten, die zu einem Kriechen der Kunststoff-Fügeteile führen würde. Wie bereits erwähnt, ist es zur Vermeidung eines Steifigkeitssprunges an der Krafteinleitungsstelle und selbstverständlich auch aus Gewichtsgründen zweckmäßig, wenn der Gelenkanschlußkörper 6 ebenfalls aus Kunststoff, und zwar aus faserverstärktem Kunststoff besteht.

Für die einander entsprechenden Profilierungen 8 und 9 können unterschiedliche Querschnittsformen vorgesehen sein, wie dies die Figuren 2, 3 oder 4 zeigen. Die in Figur 2 gezeigte Profilierung 8 des Kunststoffrohres 1 weist - in einer abgewickelten Strecklage betrachtet - trapezförmige Wülste 13 und etwa gleichartig geformte Rillen 14 auf, die eine relatif große Umfangsteilung haben, wogegen die Profilierung 8' des Rohres 1' nach Figur 3 durch enggeteilte, dreieckförmige Wülste bzw. Rillen bestimmt ist. Beide Profilformen besitzen - im Querschnitt gesehen - geradlinige Profilflanken. Das in Figur 4 gezeigte weitere Ausführungsbeispiel einer gröber geteilten Profilierung 8'' weist im Querschnitt konvex gekrümmte Profilflanken auf. Bezogen auf die an der tiefsten Stelle einer Rille 14 gemessenen Wandstärke 5 des Kunststoffrohres erstreckt sich die Profilierung in Radialrichtung - Maß p - etwa auf 33 bis 100 %. Bezogen auf die gesamte, über die Wülste 13 hinweg gemessene Wandstärke des Kunststoffrohres beträgt die radiale Höhe p der Profilierung etwa 25 bis 50 %.

Im Rahmen der Auslegung können für die einzelnen Lagen Glasfasern, Kohlenstoff-Fasern oder Aramid-Fasern eingesetzt werde, wobei diese Fasermaterialien innerhalb einer Lage auch gemischt einsetzbar sind. Vorliegend wird jedoch empfohlen, in das Matrixmaterial des Kunststoffrohres 1 in allen Lagen 2 und 4 als Endlosfasern 3 bzw. 5 ausschließlich Kohlenstoff-Fasern einzulagern, weil Fasern dieses Werkstoffes einen mehrfach höheren Elastizitätsmodul aufweisen als Glasfasern und durch die Wahl von Kohlenstoff-Fasern die Steifigkeit des Kunststoffrohres um ein Mehrfaches im Vergleich zu einem baugleichen Glasfaser-Kunststoffrohr erhöht wird. Es wird ein Faservolumenanteil von 60 bis 70 % angestrebt, bei dem ein solcher Faserverbund seine höchste Festigkeit erhält. Als Matrixwerkstoff sind verschiedene aushärtbare Kunstharze geeignet, jedoch ist aufgrund seines günstigen Eigenschaftsprofiles Epoxidharz im Zusammenhang mit Faserverstärkten Kunststoffrohren besonder häufig eingesetzt.

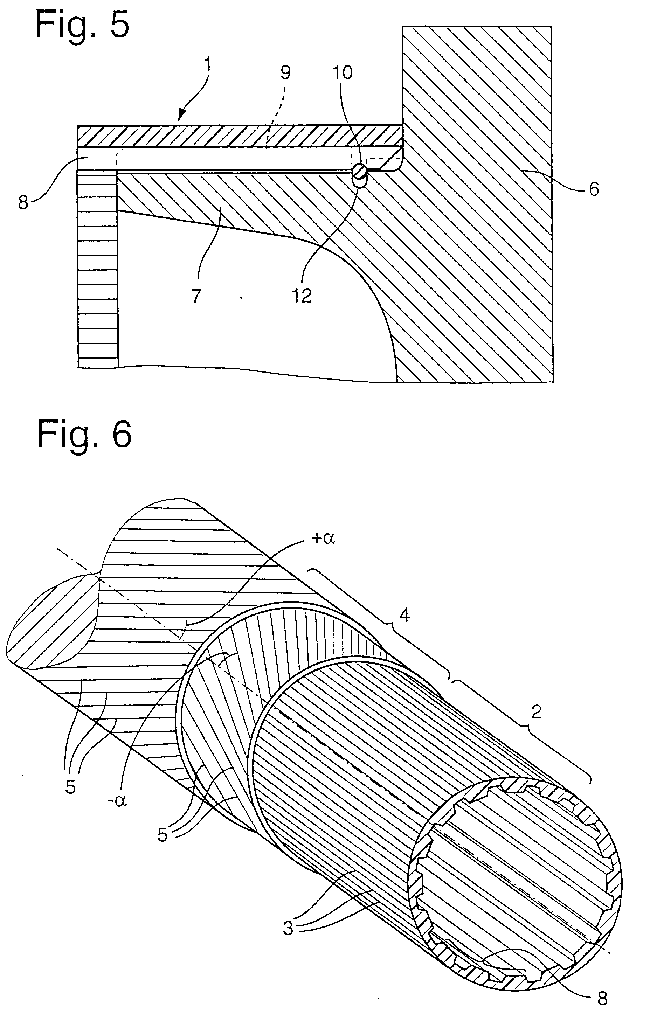

Unabhängig von der formschlüssigen Drehsicherung ist der Steckzapfen in dem Kunststoffrohr 1 außerdem in Axialrichtung gesichert, zumal der Steckzapfen nur mit Schiebesitz- oder leichter Preßsitzqualität im Rohrende gefügt ist. Diese Axialsicherung kann beispielsweise mechanisch durch eine in Figur 5 gezeigte Rastverbindung mittels eines Federsprengringes 10 bewirkt sein, der in eine Umfangsnut 11 sowohl des Kunststoffrohres 1 als auch in eine Umfangsnut 12 des Steckzapfens eingreift. Die Steckzapfen-Nut 12 ist mit ihrem Innendurchmesser um mindestens den Drahtdurchmesser kleiner als der Innendurchmesser des Federsprengringes 10 im Einbauzustand, so daß der Federsprengring beim Einbau radial nach innen einfedern kann. Vor dem Montieren des Gelenkkörpers wird der Federsprengring in die Nut 12 eingelegt und anschließend der Steckzapfen mit seiner Profilierung axial in die Profilierung des Kunststoffrohres eingeschoben. Die Wülste 13 der Rohr-Profilierung sind stirnseitig nach außen angeschrägt und drücken den Federsprengring beim Einschieben elastisch radial nach innen, wodurch sie ihn radial auf die Innenseite der Wülste 13 "heben". Sobald der Federsprengring die Axialposition der Umfangsnut 11 des Kunststoffrohres erreicht hat, federt der Ring 10 wieder auf und verrastet mechanisch Rohr 1 und Steckzapfen 7 gegen axiales Herausziehen.

Die Axialsicherung kann stattdessen beispielsweise auch durch eine Klebung bewirkt werden. Zwar gibt es für das Verkleben von Kunststoffteilen genügend bekannte und geeignete Kleber und Verklebungsverfahren, jedoch erscheint es vorliegend besonders zweckmäßig, dafür einen Zweikomponentenkleber einzusetzen, dessen beide Komponenten in mikroverkapselter Form auf wenigstens eine der Kontaktflächen, vorzugsweise auf den Steckzapfen aufgetragen werden. Der beispielsweise beim Hersteller des Gelenkanschlußkörpers bereits aufgetragene, mikroverkapselte Zweikomponentenkleber bildet auf der Profilierung 9 des Steckzapfens einen trockenen, griffesten Belag, der eine gewisse mechanisch Widerstandsfähigkeit und Lagerfähigkeit aufweist und den für eine Klebung vorbereiteten Gelenkanschlußkörper transportfähig und handhabbar macht. Zum Fügen des Gelenkanschlußkörpers mit dem Kunststoffrohr wird der Steckzapfen mit seiner Profilierung unter einem gewissen Kraftaufwand axial in die Profilierung des Kunststoffrohres eingeschoben. Aufgrund der dabei auftretenden Scherbeanspruchung des Kleberauftrages werden die Mikrokapseln selbsttätig zerstört, so daß sich die beiden Kleberkomponenten beim Einschieben des Steckzapfens vermischen und der Kleber daraufhin abbindet. In diesem Zusammenhang sei hervorgehoben, daß die axialsichernde Klebung unter Drehmomenteinfluß nicht beansprucht wird und demzufolge nicht den hohen, an eine drehmomentübertragende Klebung zwischen Gelenkanschlußkörper und Kunststoffrohr zu stellenden Qualitätsansprüchen zu genügen btraucht.

## Patentansprüche

1. Gelenkwelle mit einem endlosfaser-verstärkten, über die gesamte Länge hinweg durchmessergleichen Kunststoffrohr aus einem duroplastischen Matrixmaterial und mit einem Gelenkanschlußkörper, der über einen in das Kunststoffrohr eingesteckten Steckzapfen drehfest mit dem Kunststoffrohr verbundenen ist,
**dadurch gekennzeichnet,**
daß das mehrlagige Kunststoffrohr (1, 1', 1'') eine Innenlage (2) mit axial ausgerichteten Fasern oder Fasersträngen (3) enthält, auf der wenigstens eine Doppellage (6) mit symmetrisch zur Achsrichtung geneigt (±α) angeordneten Fasern oder Fasersträngen (5) aufgebracht ist, daß das Kunststoffrohr (1, 1', 1'') innenseitig mit einer axial ausgerichteten, auf der gesamten Längserstreckung (L) des Kunststoffrohres (1, 1', 1'') gleichbleibenden, aus Matrixwerkstoff und axial ausgerichteten Fasern oder Fasersträngen (3) gebildeten Profilierung (8, 8', 8'') nach Art eines Keilnabenprofiles versehen ist und daß der an seinem Außenumfang mit einer formnegativ entsprechenden Gegenprofilierung (9) versehene Steckzapfen (7) formschlüssig in die Innenprofilierung (8, 8', 8'') des Kunststoffrohres (1, 1', 1'') eingreift.

2. Gelenkwelle nach Anspruch 1,
**dadurch gekennzeichnet,**
daß die in das Matrixmaterial des Kunststoffrohres (1, 1', 1'') eingelagerten Endlosfasern oder Faserstränge (3, 5) in allen Lagen (2, 4) ausschließlich aus Kohlenstoff-Fasern gebildet sind.

3. Gelenkwelle nach Anspruch 1,
**dadurch gekennzeichnet,**
daß die radiale Erstreckung (p) der Profilierung (8, 8', 8'') - bezogen auf die an der tiefsten Stelle einer Rille (14) der Profilierung (8, 8', 8'') gemessenen Wandstärke (s) des Kunststoffrohres (1, 1', 1'') - etwa 33 bis 100 % der Wandstärke (s) ausmacht.

4. Gelenkwelle nach Anspruch 1,
**dadurch gekennzeichnet,**
daß der Steckzapfen (7) des Gelenkanschlußkörpers (6) mit Schiebesitzpassung oder mit leichter Preßsitzpassung in das Kunststoffrohr (1, 1', 1'') eingreift.

5. Gelenkwelle nach Anspruch 1,
**dadurch gekennzeichnet,**
daß der Steckzapfen (7) des Gelenkanschlußkörpers (6) axial gegen Herausziehen aus dem Kunststoffrohr (1, 1', 1'') in ihm gesichert ist.

6. Gelenkwelle nach Anspruch 5,
**dadurch gekennzeichnet,**
daß die Axialsicherung durch eine Klebung bewirkt ist.

7. Gelenkwelle nach Anspruch 5,
**dadurch gekennzeichnet,**
daß die Axialsicherung durch eine Rastverbindung mittels eines Federsprengringes (10) bewirkt ist, der zugleich in eine Umfangsnut (11) des Kunststoffrohres (1, 1', 1'') und in eine Umfangsnut (12) des Steckzapfens (7) eingreift.

8. Gelenkwelle nach Anspruch 6,
**dadurch gekennzeichnet,**
daß für die die Axialsicherung bewirkende Klebung ein Zweikomponentenkleber eingesetzt ist, dessen beide Komponenten in mikroverkapselter Form auf wenigstens eine der Kontaktflächen des Steckzapfens und des Rohrendes aufgetragen ist, wobei die Mikrokapseln derart ausgebildet sind, daß sie sich beim Fügen des Steckzapfens in das Kunststoffrohr aufgrund der Scherbeanspruchung selbsttätig zerstören, sich die beiden Komponenten vermischen und der Kleber daraufhin abbindet.
